Europäisches Patentamt

(19) European Patent Office

Office européen des brevets

(11) Numéro de publication: **0 041 433**
**B1**

# (12) FASCICULE DE BREVET EUROPEEN

(45) Date de publication du fascicule du brevet:
25.04.84

(51) Int. Cl.³: **B 01 J 3/06**

(21) Numéro de dépôt: **81400806.6**

(22) Date de dépôt: **21.05.81**

(54) Procédé et dispositif pour la synthèse du diamant.

(30) Priorité: **29.05.80 FR 8011942**

(43) Date de publication de la demande:
**09.12.81 Bulletin 81/49**

(45) Mention de la délivrance du brevet:
**25.04.84 Bulletin 84/17**

(84) Etats contractants désignés:
**BE CH DE FR GB IT LI NL**

(56) Documents cités:
**FR - A - 1 243 279**
**FR - A - 2 342 942**

(73) Titulaire: **COMMISSARIAT A L'ENERGIE ATOMIQUE
Etablissement de Caractère Scientifique Technique et
Industriel, B.P. 510, F-75752 Paris Cedex 15 (FR)**

(72) Inventeur: **Bedere, Serge, 38, rue des Sablons,
F-91780 Chalo-St-Mars (FR)**
Inventeur: **Borgoltz, Jean-Philippe, 10, Domaine de
Chanteloup, F-91290 Saint Germain-lès-Arpajon (FR)**
Inventeur: **Moussin, Claude, 1, rue Maryse Bastié,
F-78140 Velizy-Villacoublay (FR)**

(74) Mandataire: **Mongrédien, André et al, c/o
BREVATOME 25, rue de Ponthieu, F-75008 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit
être formée par écrit et motivée. Elle n'est réputée formée qu'après paiement de la taxe d'opposition (Art. 99(1) Convention sur le
brevet européen).

## Procédé et dispositif pour la synthèse du diamant

La présente invention a trait à un procédé et à un dispositif pour la synthèse du diamant.

Une méthode connue consiste à utiliser un solvant-catalyseur lequel, porté à l'état liquide, dissout le graphite dans des conditions adéquates de température et de pression. Les solvants-catalyseurs actuellement utilisés sont des métaux du groupe VIII de la classification périodique ou des alliages de ces métaux.

L'utilisation de tels solvants-catalyseurs impose de travailler à des températures élevées, de l'ordre de 1000 à 2500° C et par conséquent à des pressions élevées (de l'ordre de 50 à 90 kilobars), ce qui constitue des conditions de fonctionnement sévères pour les enceintes à haute pression.

Un autre procédé connu permet de travailler sous des conditions beaucoup moins sévères (400 à 700° C, 10 à 20 kbar), mais il utilise comme produits de départ des composés de carbone et de fluor réagissant avec des métaux tels que l'aluminium, le magnésium ou le nickel. Dans la plupart des cas, on n'obtient pas du diamant pur, mais un mélange de particules de diamant pur et de diamant fluoré. De plus, les temps de montée, ainsi que de maintien en température et en pression sont relativement longs (temps de maintien de l'ordre de 1 à 72 heures).

La présente invention a justement pour objet un procédé et un dispositif qui remédient à ces inconvénients en permettant d'obtenir du diamant pur en un temps relativement court, tout en travaillant dans des domaines de température et de pression qui ne présentent aucun danger pour les installations.

Selon la caractéristique essentielle du procédé objet de l'invention, celui-ci, du genre de ceux qui consistent à placer dans une enceinte à haute pression un empilement de pastilles de graphite et d'un matériau catalyseur, se caractérise en ce que ce dernier est un alliage d'au moins un métal du groupe VII ou VIII de la classification périodique avec un élément ayant la même structure cristallographique que le diamant, et en ce qu'il comporte les étapes suivantes:

— on augmente la pression dans l'enceinte, puis la température jusqu'à ce que l'alliage commence à se liquéfier, une partie au moins dudit élément se trouvant sous forme de particules solides à l'intérieur de la masse liquide,

— on maintient les conditions de température et de pression suffisamment longtemps pour que le graphite se transforme en diamant, le carbone migrant à travers l'alliage liquéfié depuis les pastilles jusqu'aux particules solides précitées sur lesquelles il se dépose et cristallise, par épitaxie, dans le système du diamant, et

— on ramène ensuite l'ensemble aux conditions initiales.

Les métaux entrant dans la composition de l'alliage sont de préférence choisis dans le groupe comprenant le fer, le cobalt, le nickel, le platine et le manganèse, l'alliage pouvant éventuellement être un alliage ternaire ou quaternaire. Quant à l'élément ayant même structure cristallographique que le diamant, ce peut être du germanium ou du silicium, qui conviennent très bien dans le cadre de la présente invention.

L'utilisation de tels alliages présente des avantages multiples: tout d'abord, ils forment des eutectiques dans la gamme de température comprise entre 800 et 1200° C, températures suffisantes pour obtenir au moins un film liquide de matériau-catalyseur, ce qui est nécessaire pour effectuer la synthèse. D'autre part, le fait de travailler dans cette gamme de températures relativement basses permet d'utiliser des pressions moyennes, de l'ordre de 30 à 60 kilobars, ce qui évite de soumettre les enceintes à haute pression à des conditions de fonctionnement trop sévères.

Enfin, si la composition de l'alliage reste voisine de celle de l'eutectique, l'élément qui a même structure cristallographique que le diamant reste, du moins en partie, à l'état de particules solides à l'intérieur de la masse d'alliage liquéfié. Ces particules servent de germes à la cristallisation, par épitaxie, du carbone dans le système du diamant: en effet, les atomes de carbone migrent à travers l'alliage liquéfié, depuis les pastilles de graphite jusqu'à ces particules où ils se déposent et cristallisent dans le même système que celles-ci.

La présente invention a également pour objet un dispositif pour la mise en œuvre du procédé évoqué précédemment.

Ce dispositif, du genre de ceux qui se composent d'une enceinte annulaire générant de hautes pressions, ladite enceinte comportant une couronne intermédiaire et deux pistons délimitant un volume de confinement et des moyens pour chauffer par effet Joule l'empilement de pastilles de graphite et d'alliage grâce à un courant électrique qui traverse ledit empilement, le courant étant amené à travers les deux pistons, se caractérise en ce que l'empilement de pastilles est entouré d'une gaine en nitrure de bore l'isolant d'un milieu transmetteur de pression en pyrophyllite, l'étanchéité étant assurée par des joints en téflon et en ce qu'il comporte deux thermocouples de forme rectiligne traversant successivement, de l'extérieur vers l'intérieur, les joints en téflon et le milieu transmetteur de pression avant d'arriver à la gaine en nitrure de bore.

Enfin, l'invention a également pour objet les produits obtenus par le procédé évoqué précédemment.

Selon la principale caractéristique de ces produits, ceux-ci sont des cristaux de diamants ayant une teneur en impuretés inférieure à 100 parties par million.

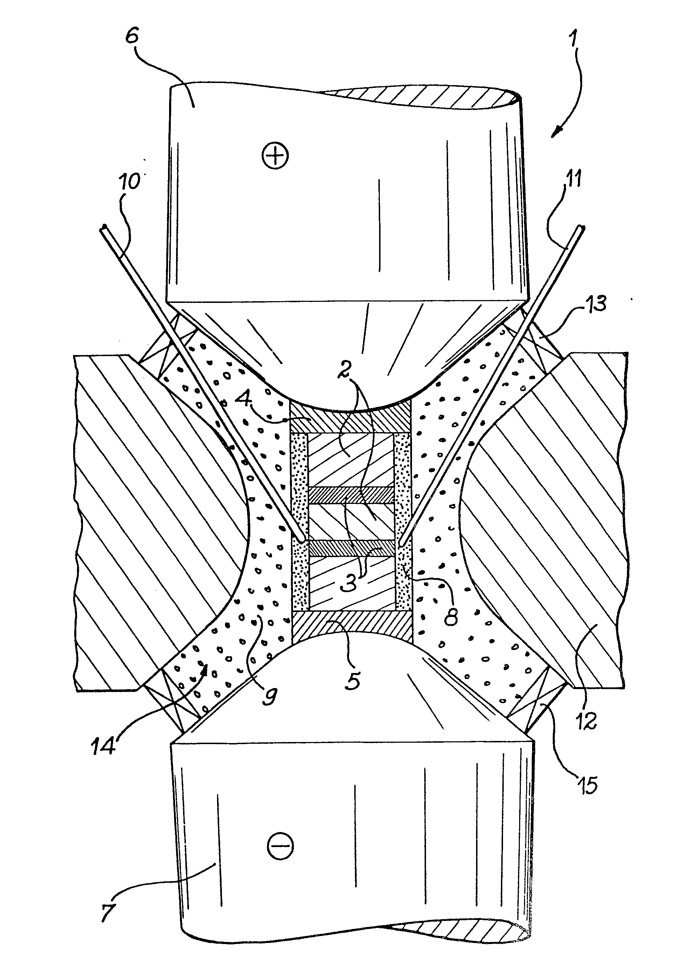

L'invention sera mieux comprise et la mise en œuvre du procédé apparaîtra plus clairement à l'aide de la description qui va suivre d'un exemple de réalisation, description donnée à titre purement illustratif et non limitatif, à l'aide du dessin annexé, lequel comporte une figure unique représentant une vue schématique en coupe de l'empilement de pastilles de graphite et déalliage placé dans l'enceinte à haute pression utilisée pour la synthèse.

Cette dernière peut être, par exemple, l'enceinte à haute pression décrite dans le brevet français n° 1 457 690 du 23 septembre 1965, complétée par l'addition n° 89 399 du 14 janvier 1966, appartenant au déposant, qui convient très bien dans le cadre de la présente invention.

Sur la figure, on voit, dans une enceinte 1, un empilement de pastilles cylindriques, alternativement de graphite 2 et d'un alliage 3 de nickel et de germanium. Celui-ci présente un eutectique apparaissant à 775° C pour une composition de 67% (en poids) de germanium et 33% de nickel, mais la composition eutectique n'est pas impérative: dans le cas du nickel-germanium, on peut utiliser des alliages dont le pourcentage pondéral de germanium est compris entre 20% et 90%. On peut encore doper l'alliage avec des éléments comme le cuivre, le pourcentage pondéral de ce dernier restant inférieur à 10%. Le graphite d'une part, l'alliage d'autre part, peuvent se présenter soit sous forme de poudre préalablement compactée, soit sous forme de disques massifs usinés, soit encore une combinaison de ces deux techniques, par exemple le graphite massif et le nickel-germanium sous forme de poudre.

La mise sous pression de l'empilement se fait grâce aux deux pistons 6 et 7. Ces pistons et une couronne intermédiaire 12 délimitent un volume de confinement 14 rempli de pyrophylitte qui constitue un milieu transmetteur de pression 9 tandis que deux joints haute pression 13 et 15 en téflon assurent l'étanchéité du volume de confinement 14. Quant à la montée en température, elle peut se faire par effet Joule, puisque les matériaux constituant l'empilement sont de bons conducteurs électriques; dans ce cas, deux disques en tantale 4 et 5, épousant la forme des pistons 6 et 7 respectivement, sont placées aux extrémités de l'empilement pour assurer le passage du courant. Dans l'exemple décrit ici, c'est du courant continu qui est utilisé, celui-ci arrivant à travers les pistons 6 et 7. On peut utiliser indifféremment du courant alternatif ou du courant continu, mais ce dernier présente l'avantage de provoquer un effet électrolytique dans les pastilles d'alliages: les cristaux de diamant se forment plutôt au voisinage d'une face de ces pastilles, ce qui facilite leur récupération.

Une gaine 8 en nitrure de bore isole les pastilles de graphite 2 et d'alliage 3 du milieu transmetteur de pression 9, qui peut être de la pyrophylitte. Le rôle de cette gaine est essentiellement de protéger l'empilement de pastilles 2 et 3 des silicates qui peuvent se former dans la pyro phylitte lorsque celle-ci est soumise à de fortes pressions et de hautes températures: ces silicates risquent de passer dans l'alliage, rendant plus difficile l'extraction des cristaux de diamant. Deux thermocouples 10 et 11 permettent de suivre l'évolution de la température. Ces derniers, de forme rectiligne, traversent successivement le joint 13, le milieu transmetteur de pression 9 et la gaine 8 sans arriver toutefois au contact des pastilles 2 et 3: la forme rectiligne de ces thermocouples leur permet de résister aux fortes pressions règnant à l'intérieur de la masse de pyrophylitte.

Un exemple de cycle peut être le suivant:

— à température ambiante, montée de la pression à 0,4 kbar/minute jusqu'à une valeur maximale de 50 kbar,
— montée en température à une vitesse de 60° C/minute jusqu'à 900° C,
— maintien des conditions de synthèse pendant 15 minutes.

Il est bien entendu que les conditions de ce cycle ne sont qu'indicatives et qu'on peut les faire varier sans sortir pour autant du cadre de l'invention. Par exemple, la vitesse de montée en température peut varier entre 10° C/minute et 150° C/minute, la durée de maintien se situant entre 3 minutes et 2 heures. Quant à la pression à laquelle est effectuée la synthèse, elle peut varier entre 30 et 60 kbar, toutes ces conditions pouvant être ajustées en fonction de la dimension et des qualités optiques et mécaniques recherchées pour les cristaux. D'autre part, il est possible d'utiliser du courant alternatif pour chauffer l'empilement de pastilles.

Un autre essai a été réalisé avec pour catalyseur un alliage de nickel et de germanium contenant 67% en poids de nickel. Cette expérience s'est déroulée de la manière suivante:

— à température ambiante, montée de la pression à la vitesse de 0,38 kbar/minute jusqu'à une valeur de 55 kbar environ,
— montée en température à une vitesse de 20° C Minute jusqu'à 1200° C,
— maintien des conditions de synthèse pendant quelques minutes,
— arrêt du chauffage et réduction de la pression de 55 à 40 kbar.

Le diamant est identifié par diffraction aux rayons X mettant en évidence les trois pics principaux du diamant, correspondant aux plans cristallographiques (111), (220) et (311) du diamant cubique.

Les distances interréticulaires mesurées sont comparées aux distances du fichier ASTM dans le tableau ci-dessous:

| hkl | d (ASTM) hkl (Å) | d mesurée hkl (Å) |
|-----|------|------|
| 111 | 2,059 | 2,062 |
| 220 | 1,261 | 1,263 |
| 311 | 1,075 | 1,077 |

On voit donc que le procédé décrit ici présente de nombreux avantages: il permet de travailler à des températures relativement basses (800/1200°C) et à des pressions suffisamment faibles (30 à 60 kbars) pour éviter de soumettre les enceintes dans lesquelles on effectue la synthèse à des conditions de fonctionnement trop sévères. Enfin, la durée d'une opération est assez brève puisque le maintien en pression et en température ne dépasse pas deux heures. Quant aux produits obtenus, ce sont des cristaux de diamant assez purs puisque la teneur en impuretés ne dépasse pas 100 parties par million, ce qui leur confère de bonnes qualités optiques et une bonne résistance mécanique, la dimension des cristaux étant de l'ordre de 10 à 100 micromètres environ.

Le procédé peut s'appliquer à la fabrication de diamant artificiel de dimensions et de qualités optiques et mécaniques diverses.

**Revendications**

1. Procédé pour la synthèse du diamant, du genre de ceux qui consistent à placer dans une enceinte à haute pression (1) un empilement de pastilles de graphite (2) et d'un matériau catalyseur (3), caractérisé en ce que ce dernier est un alliage d'au moins un métal du groupe VII ou VIII de la classification périodique avec un élément ayant la même structure cristallographique que le diamant, et en ce qu'il comporte les étapes suivantes:

— on augmente la pression dans l'enceinte, puis la température jusqu'à ce que l'alliage (3) commence à se liquéfier, une partie au moins dudit élément se trouvant sous forme de particules solides à l'intérieur de la masse liquide,

— on maintient les conditions de température et de pression suffisamment longtemps pour que le graphite se transforme en diamant, le carbone migrant à travers l'alliage liquéfié depuis les pastilles (2) jusqu'aux particules solides précitées sur lesquelles il se dépose et cristallise, par épitaxie, dans le système du diamant, et

— on ramène ensuite l'ensemble aux conditions initiales.

2. Procédé selon la revendication 1, caractérisé en ce que le graphite et/ou l'alliage se trouve sous forme de poudre préalablement compactée.

3. Procédé selon l'une quelconque des revendications 1 ou 2, caractérisé en ce que l'alliage (3) est un alliage ternaire ou quaternaire comprenant, en plus de l'élément ayant même structure cristallographique que le diamant, au moins deux métaux choisis dans le groupe comprenant le fer, le cobalt, le nickel, le manganèse et le platine.

4. Procédé selon l'une quelconque des revendications 1 à 3, caractérisé en ce que l'élément présentant la même structure cristallographique que le diamant est du germanium ou du silicium.

5. Procédé selon l'une quelconque des revendications 1 à 4, caractérisé en ce que la montée en température de l'empilement de pastilles est obtenue par effet Joule, l'empilemant étant parcouru par un courant électrique continu.

6. Procédé selon l'une quelconque des revendications 1 à 5, caractérisé en ce que l'on effectue la synthèse à une température de 800 à 1200°C et sous une pression de 30 à 60 kilobars.

7. Procédé selon l'une quelconque des revendications 1 à 6, caractérisé en ce que la montée en pression se fait à une vitesse de 0,4 kilobars par minute.

8. Procédé selon l'une quelconque des revendications 1 à 7, caractérisé en ce que la montée en température se fait à une vitesse comprise entre 10°C/minute et 150°C/minute et de préférence à 60°C/minute.

9. Procédé selon l'une quelconque des revendications 1 à 8, caractérisé en ce que la durée du maintien en pression et en température est comprise entre 3 minutes et 2 heures.

10. Dispositif pour la mise en œuvre du procédé selon l'une quelconque des revendications 1 à 9, du genre de ceux qui se composent d'une enceinte annulaire (1) générant de hautes pressions, ladite enceinte comportant une couronne intermédiaire (12) et deux pistons (6, 7) délimitant un volume de confinement (14) et des moyens pour chauffer par effet Joule l'empilement de pastilles de graphite (2) et d'alliage (3) grâce à un courant électrique qui traverse ledit empilement, le courant étant amené à travers les deux pistons (6, 7), caractérisé en ce que l'empilement de pastilles est entouré d'une gaine (8) en nitrure de bore l'isolant d'un milieu transmetteur de pression (9) en pyrophyllitte, l'étanchéité étant assurée par des joints en téflon (13) et en ce qu'il comporte deux thermocouples (10, 11) de forme rectiligne traversant successivement, de l'extérieur vers l'intérieur, les joints en téflon (13) et le milieu transmetteur de pression (9) avant d'arriver à la gaine (8) en nitrure de bore.

11. Produits obtenus par le procédé selon l'une quelconque des revendications 1 à 9, caractérisés en ce que ces produits sont des cristaux de diamant dont la teneur en impuretés est inférieure à 100 parties par million.

**Patentansprüche**

1. Verfahren zur Synthese von Diamanten des Typs, bei dem ein Stapel von Pastillen aus Graphit (2) und einem Katalysatormaterial (3) in eine Hochdruckkammer (1) eingeführt wird, dadurch gekennzeichnet, daß es sich bei dem Katalysatormaterial (3) um eine Legierung aus mindestens einem Metall der Gruppe VII oder VIII des Periodischen Systems der Elemente mit einem Element, das die gleiche Kristallstruktur wie Diamant hat, handelt und daß es die folgenden Stufen umfaßt:

— man erhöht den Druck in der Kammer, dann die Temperatur, bis die Legierung (3) sich zu verflüssigen beginnt, wobei mindestens ein Teil des Elements in Form von Feststoffteilchen im Inneren der flüssigen Masse vorliegt,

— man hält die Temperatur- und Druckbedingungen ausreichend lange aufrecht, so daß der Graphit in Diamant umgewandelt wird, wobei der Kohlenstoff aus den Pastillen (2) durch die verflüssigte Legierung hindurch zu den obengenannten Feststoffteilchen wandert, auf denen er sich durch Epitaxie ablagert und in dem Diamantsystem kristallisiert, und

— man führt anschließend das ganze wieder zurück auf die Ausgangsbedingungen.

2. Verfahren nach Anspruch 1, dadurch gekennzeichnet, daß der Graphit und/oder die Legierung in Form eines vorher verdichteten Pulvers vorliegen.

3. Verfahren nach Anspruch 1 oder 2, dadurch gekennzeichnet, daß es sich bei der Legierung (3) um eine ternäre oder quaternäre Legierung handelt, die außer dem Element mit der gleichen Kristallstruktur wie Diamant mindestens zwei Metalle enthält, die ausgewählt werden aus der Gruppe Eisen, Kobalt, Nickel, Mangan und Platin.

4. Verfahren nach einem der Ansprüche 1 bis 3, dadurch gekennzeichnet, daß es sich bei dem Element, das die gleiche Kristallstruktur wie Diamant hat, um Germanium oder Silicium handelt.

5. Verfahren nach einem der Ansprüche 1 bis 4, dadurch gekennzeichnet, daß der Anstieg der Temperatur des Pastillenstapels durch einen Jouleschen Effekt erzielt wird, wobei ein elektrischer Gleichstrom durch den Stapel fließt.

6. Verfahren nach einem der Ansprüche 1 bis 5, dadurch gekennzeichnet, daß die Synthese bei einer Temperatur von 800 bis 1200° C und unter einem Druck von 30 bis 60 Kilobar durchgeführt wird.

7. Verfahren nach einem der Ansprüche 1 bis 6, dadurch gekennzeichnet, daß der Druckanstieg mit einer Geschwindigkeit von 0,4 Kilobar pro Minute erfolgt.

8. Verfahren nach einem der Ansprüche 1 bis 7, dadurch gekennzeichnet, daß der Temperaturanstieg mit einer Geschwindigkeit zwischen 10° C/min und 150° C/min und vorzugsweise mit 60° C/min erfolgt.

9. Verfahren nach einem der Ansprüche 1 bis 8, dadurch gekennzeichnet, daß die Zeitspanne, während der der Druck und die Temperatur aufrechterhalten werden, zwischen 3 Minuten und 2 Stunden liegt.

10. Apparat zur Durchführung des Verfahrens nach einem der Ansprüche 1 bis 9 des Typs, der besteht aus einer Ringkammer (1), die hohe Drücke erzeugt, die enthält einen Zwischenring (12) und zwei Kolben (6, 7), die ein Einschlußvolumen (14) begrenzen, und Einrichtungen zum Erwärmen des Stapels von Pastillen aus Graphit (2) und der Legierung (3) mittels des Jouleschen Effektes durch einen durch den Stapel hindurchfließenden elektrischen Strom, der durch die beiden Kolben (6, 7) hindurchgeführt wird, dadurch gekennzeichnet, daß der Stapel von Pastillen von einer Hülle (8) aus Bornitrid umgeben ist, die ihn gegenüber einem Druckübertragungsmedium (9) aus Pyrophyllit isoliert, wobei die Abdichtung gewährleistet wird durch Teflondichtungen (13), und daß er zwei geradlinige Thermoelemente (10, 11) umfaßt, die nacheinander, von außen nach innen, die Teflondichtungen (13) und das Druckübertragungsmedium (9) durchqueren, bevor sie die Hülle (8) aus Bornitrid erreichen.

11. Produkte, hergestellt nach dem Verfahren nach einem der Ansprüche 1 bis 9, dadurch gekennzeichnet, daß diese Produkte Diamantkristalle sind, deren Gehalt an Verunreinigungen unter 100 Teilen pro Million Teilen liegt.

**Claims**

1. Process for the synthesis of diamonds, of the type which comprises placing in a high-pressure reactor (1), a stack of pellets of graphite (2) and of a catalyst material (3), characterized in that the latter is an alloy of at least one metal of group VII or VIII of the periodic classification with an element having the same crystal structure as diamond, and in that the process comprises the following stages:

— pressurizing the reactor, and then increasing the temperature to that at which the alloy (3) begins to liquefy, at least a part of said element being in the form of solid particles in the interior of the liquid mass,

— maintaining these temperature and pressure conditions over a sufficiently long period for graphite to be converted into diamond, the carbon migrating through the liquefied alloy from the pellets (2) to the above-mentioned solid particles, on which it accumulates and crystallizes by epitaxial growth in the diamond crystal form, and

— the assembly is subsequently restored to its initial conditions.

2. Process according to Claim 1 characterized in that the graphite and/or the alloy are in the form of a previously-compacted powder.

3. Process according to either of Claims 1 or 2 characterized in that the alloy (3) is a ternary or quaternary alloy comprising, in addition to the element having the same crystal structure as diamond, at least two metals selected from the group comprising iron, cobalt, nickel, manganese and platinum.

4. Process according to any one of Claims 1 to 3 characterized in that the element having the same crystal structure as diamond is germanium or silicon.

5. Process according to any one of Claims 1 to 4 characterized in that the temperature increase within the stack of pellets is obtained by the Joule effect from a direct electrical current passing through the stack.

6. Process according to any one of Claims 1 to 5 characterized in that the synthesis is carried out at a temperature of 800 to 1200°C and under a pressure of 30 to 60 kilobars.

7. Process according to any one of Claims 1 to 6 characterized in that the pressurization is conducted at a rate of 0.4 kilobars per minute.

8. Process according to any one of Claims 1 to 7 characterized in that the temperature increase is conducted at a rate of between 10°C/minute and 150°C/minute, and preferably at 60°C/minute.

9. Process according to any one of Claims 1 to 8 characterized in that the elevated temperature and pressure are maintained for a period of between 3 minutes and 2 hours.

10. Apparatus for carrying out the process according to any one of Claims 1 to 9, of the type which comprises an annular reactor (1) generating high pressures, said reactor comprising an intermediate annulus (12) and two pistons (6, 7) defining a confinement space (14), and means for heating the stack of pellets of graphite (2) and alloy (3) by the Joule effect resulting from an electrical current passing through the stack, the current being led across the two pistons (6, 7), characterized in that the stack of pellets is surrounded by a sheath (8) of boron nitride, isolating it from a pressure-transmitting medium (9) comprising pyrophylite, sealing being provided by teflon seals (13), and in that it comprises two thermocouples (10, 11) of rectilinear form successively passing inwardly through the teflon seals (13) and the pressure-transmitting medium (9) before reaching the boron nitride sheath (8).

11. Products obtainable by a process according to any one of Claims 1 to 9 characterized in that said products are diamond crystals whose impurity content is less than 100 parts per million.